(19) **Europäisches Patentamt**
**European Patent Office**
**Office européen des brevets**

(11) **EP 2 007 092 A1**

(12) **EUROPEAN PATENT APPLICATION**

(43) Date of publication:
**24.12.2008 Bulletin 2008/52**

(51) Int Cl.:
***H04L 27/26*** *(2006.01)*

(21) Application number: **07012008.4**

(22) Date of filing: **19.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nokia Siemens Networks Oy**
**02610 Espoo (FI)**

(72) Inventors:
• **Jelonnek, Björn, Dr.**
**89079 Ulm (DE)**
• **Wolff, Gunter, Dr.**
**89081 Ulm (DE)**

(74) Representative: **Bruglachner, Thomas E.**
**Nokia Siemens Networks GmbH & Co. KG**
**Patentabteilung**
**Postfach 80 17 60**
**81617 München (DE)**

(54) **Cyclic filter circuit, circuit arrangement and method for filtering**

(57)     The present invention is related to a cyclic filter circuit for multi-carrier data transmission systems, comprising: an input terminal for providing an oversampled input signal, at least one first delay chain coupled to the input terminal having an amount of first delay elements for storing the sample values of at least one data symbol of the input signal, at least one second delay chain having an amount of second delay elements, which comprises a feedback line between the last one and the first one of the second delay chain, switching means between the first and second delay chain to cyclically and symbol-wise transfer the stored data of the first delay elements to corresponding second delay elements of the second delay chain, wherein the second delay chain comprises a feedback line between the last one and the first one of the second delay elements to allow a rotation of the stored data when the sample values are weighted and added up in the second delay chain. The present invention is further related to a circuit arrangement comprising such a cyclic filter circuit and a method for filtering a received data signal using a cyclic filter.

FIG 3

**Description**

FIELD OF THE INVENTION

The present invention is related to a cyclic filter circuit for multi-carrier data transmission systems, especially in a wireless communication system. The present invention is further related to a circuit arrangement comprising such a cyclic filter circuit and a method for filtering a received data signal using a cyclic filter.

TECHNICAL BACKGROUND OF THE INVENTION

Wireless communication systems are well known in the art. In wireless communication systems, data (for example voice data, image data other digital data) are transmitted by means of electromagnetic waves via a wireless interface. A "wireless communication system" refers to a communication system having a transmitting end and a receiving end in which signals are transmitted or communicated from the transmitting end to the receiving end via a signal path, wherein a portion of the signal path from the transmitting end to the receiving end includes signal transmission via a wireless medium. Hereinafter, the present invention and the underlying problem is described with regard to such a wireless communication system, whereas, it should be noted, that the present invention is not restricted on a wireless communication system, but can also be used for wired communication, such as a broad band-communication system.

In modern telecommunication, high bit rate data transmission plays an increasing role, particularly because it promises a greater usable bandwidth of the data to be transmitted. A technology increasingly gaining importance in recent times is the so-called multi-carrier data transmission, also known as "discrete multi-tone transmission" (DMT) or as "orthogonal frequency division multiplexing" (OFDM) transmission. Here, in OFDM-trahsmission the data transmission is typically carried out in symbols using orthogonal, frequency-separated sub-carriers by modulating parallel data on these sub-carriers during the period of one symbol. Such data transmission methods are used, for example, in wired transmission systems but also in wireless transmission systems in the radio domain for broadcast systems, for access to data networks and for wireless communication applications.

In digital wireless communication systems the data communication is performed by generating digitally encoded signals, the so-called symbols, which are transmitted from one transmitting unit to another one. For this data communication a multiplicity of data paths are used. The various signals received by the receiving unit may cause delay spreads between the digitally encoded signals. Therefore, by using multi-carrier data transmission so-called inter-symbol interferences (ISI) - also known as crosstalks - may occur.

In the base-band of modern multi-carrier systems digital data signals are used, the so-called data symbols. These data symbols are transmitted via wireless transmission paths and are then reconstructed by oversampling the data symbol. However, typically this reconstructed data signal differs from the original data signal because of so-called alias effects which may be caused by frequency parts of this data signal, the so called alias spectrum. This alias spectrum within a digital signal is not desired and would interfere with adjacent symbols. Therefore this alias spectrum should be eliminated or at least reduced.

Typically this problem is solved by filtering and oversampling the digital base-band signal. However, due to the length of the filter pulse response cross-talks between adjacent symbols may occur during the process of filtering at the boundary of the symbols. This is known as inter-symbol interference (ISI). Therefore, another reason for the appearance of inter-symbol interferences may be an unsuitable filter-circuit which is arranged in the transmission path.

To avoid those inter-symbol interferences it is possible to calculate the digital base-band signal at the final sampling frequency. However, this needs a significant high calculation effort which is usually not available especially in low power, high speed digital wireless communication systems, such as personal communication services (PCS).

On the other hand, all data interfaces have to be adapted to the significant higher data rate with the consequence that it is necessary to provide a many-fold of the transmitted data rate.

The present invention, therefore, is based on the object to more efficiently reduce or even eliminate the inter-symbol interferences especially in wireless symbol-based communication systems.

SUMMARY OF THE INVENTION

In accordance with the present invention, a method having the features of claim 18 is provided and/or a filter circuit having the features of claim 1 is provided.

Accordingly it is provided:

A cyclic filter circuit for multi-carrier data transmission systems, comprising: an input terminal for providing an oversampled input signal, at least one first delay chain coupled to the input terminal having an amount of first delay elements for storing the sample values of at least one data symbol of the input signal, at least one second delay chain having an amount of second delay elements, which comprises a feedback line between the last one and the first one of the second delay chain, switching means between the first and second delay chain to cyclically and symbol-wise transfer the stored data of the first delay elements to corresponding second delay elements of the second delay chain, wherein the second delay chain comprises a feedback line between the last one and the first one of the second delay elements to allow a rotation of the stored data when the sample values are weighted and added up in the second delay chain.

- A circuit arrangement comprising: at least one oversampling circuit for oversampling a baseband signal, at least one cyclic filter circuit according to the present invention for filtering the oversampled baseband signal.
- A method for filtering a received data signal using a cyclic filter, wherein per data symbol of an oversampled digital input signal the different values of the data symbol are cyclically rotated within the same data symbol when they are passing through the cyclic filter such that the filtering only takes place at one and the same symbol.

The present invention is based on the idea that the filtering of a received input data symbol after oversampling is performed per symbol cyclically. For this the filter pulse symbol is swapped at the boundaries of the symbol. Afterwards, the single sections of the filter pulse response are added and used for the filtering on a symbol basis.

By filtering the transmitted symbols cyclically an alias-free, over-sampled signal without any inter-symbol interference is generated. The reason for this alias-free signal lies in the fact, that per symbol the different samples of the symbols are cyclically rotated within the same symbol when they are passing through the filter such that the filtering only takes place at one and the same symbol. Since this filtering is performed on a symbol basis the result of the filtering is a signal without any inter-symbol interference.

The great benefit of this procedure is a low calculation effort compared to a conventional alternative where the signal is calculated from the beginning of the filtering by using the final sampling rate. The calculation effort of the method and circuit according to the present invention is comparable with conventional filter circuit arrangements, however, having the benefit of avoiding inter-symbol interferences completely.

Another special benefit lays in the fact, that alias effects may be reduced since alias sections within the symbol can be better deleted since it is possible to use filter pulse responses which are, theoretically, endless, e. g. having the filter pulse responses of an ideal rectangular filter.

In a preferred embodiment the swapping of the filter pulse response is performed at that boundary of the symbol without a cyclic prefix. This implementation is especially preferred for OFDM-and/or OFDMA-based communication systems.

In a preferred embodiment the cyclic filtering may be performed together with an oversampling by using several subsequent stages of the oversampling circuit. In this case, for example the same number of stages for the cyclic filter is used as for the over sampling circuits.

This embodiment is especially very preferable if more than one symbol have to be combined with each other.

In another preferred embodiment the filter is constructed on the basis of a FIR-filter (FIR = finite impulse response).

In another, also preferred embodiment the filter for performing the cyclic filtering is on the basis of a polyphase filter (PPF).

Advantages, embodiments and further developments of the present invention can be found in the further subclaims and in the following description, referring to the drawings.

BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:

Figure 1      shows a typical filter pulse response in the time domain;

Figures 1a, 1b      show two further illustrations of the pulse responses in figure 1;

Figure 2      shows different steps to illustrate the filtering;

Figure 3      shows a first embodiment of a cyclic filter according to the present invention;

Figure 4      shows a block diagram illustrating a first embodiment of a circuit arrangement having a cyclic filter according to the present invention;

Figure 5      shows a block diagram illustrating a second embodiment of a circuit arrangement having a cyclic filter according to the present invention;

Figure 6      shows a block diagram illustrating a third embodiment of a circuit arrangement having a cyclic filter according to the present invention;

Figure 7      shows a second embodiment of a cyclic filter according to the present invention;

Figure 8      shows a block diagram illustrating a circuit arrangement using an amount of polyphases;

Figure 9          shows a circuit arrangement comprising several cyclic polyphase filters according to the present invention;

Figure 10          shows a cyclic halfband polyphase filter having a cyclic filter according to the present invention;

Figure 11          shows a block diagram illustrating a third embodiment of a circuit arrangement having a cyclic filter according to the present invention.

In all figures of the drawings, elements, features and signals which are the same or at least have the same functionality have been provided with the same reference symbols, unless explicitly stated otherwise.

DETAILED DESCRIPTION OF PREFERRED EMBODIMENTS OF THE INVENTION

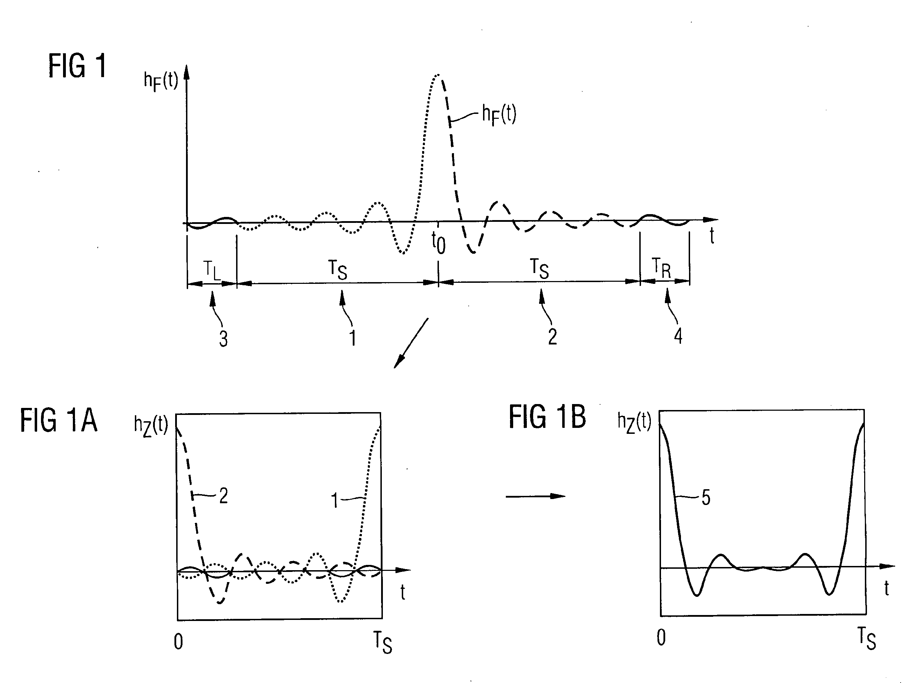

Figure 1 shows one example of a typical filter pulse response of a filter circuit which may be used for filtering an oversampled digital baseband signal. In figure 1 a single symbol is shown. The filter pulse response $h_F$ (t) in figure 1 is shown in the time domain. This filter pulse response $h_F$(t) shows a signal maximum at the point to.

In the first step, according to the present invention the so called cyclic filter pulse response $h_z$ (t) is established out of the filter pulse response $h_F$ (t). This is shown in figures 1a, 1b. For generating the cyclic filter pulse response $h_z$(t) the filter pulse response $h_F$(t) is shifted such that no additional mismatch in the time domain is generated. For this, the signal maximum point to, i. e. the maximum of the filter pulse response $h_F$(t) is determined. This signal maximum point $t_0$ is used to move the filter pulse response $h_F$ (t) accordingly. The signal maximum point to results from:

$$t_0 = \frac{\int t \cdot h_F{}^2(t)dt}{\int h_F{}^2(t)dt}$$

The cyclic filter pulse response $h_z$(t) is received by cutting and clapping the filter pulse response $h_F$(t) at the symbol boundaries and by adding up corresponding sections of the filter pulse response $h_F$(t). For this, the filter pulse response is divided in two main sections 1, 2 and into two residual sections 3, 4 which are arranged at the left and the right boundaries of the main sections 1, 2 of the filter pulse response $h_F$(t). Each one of the main sections 1, 2 has the same duration $T_s$. The two residual sections 3, 4 at the right and left boundaries of the main sections 3, 4 have a duration $T_R \leq T_S$ and $T_L \leq T_s$, respectively. The both main sections 1, 2 are then transferred to a new coordinate system in the time domain (figure 1a). This coordinate system has a time interval $[0,T_s]$ at its ordinate. The two main sections 1, 2 of the symbol are then added up in this new coordinate system to generate the cyclic filter pulse response $h_z$(t) (denoted by reference symbol 5 in figure 1b).

This procedure is only carried out once and serves for determining the filter coefficients of a filter circuit.

The length of the filter pulse response $h_F$(t) is optional and does not have any boundaries since it is only necessary to fetch any two main sections 1, 2 of the same length for generating the cyclic pulse response. The overall length of the filter pulse response $h_F$ (t) only effects the duration of the residual sections at the left and right boundary of the symbol, but not the length of a given main section 1, 2.

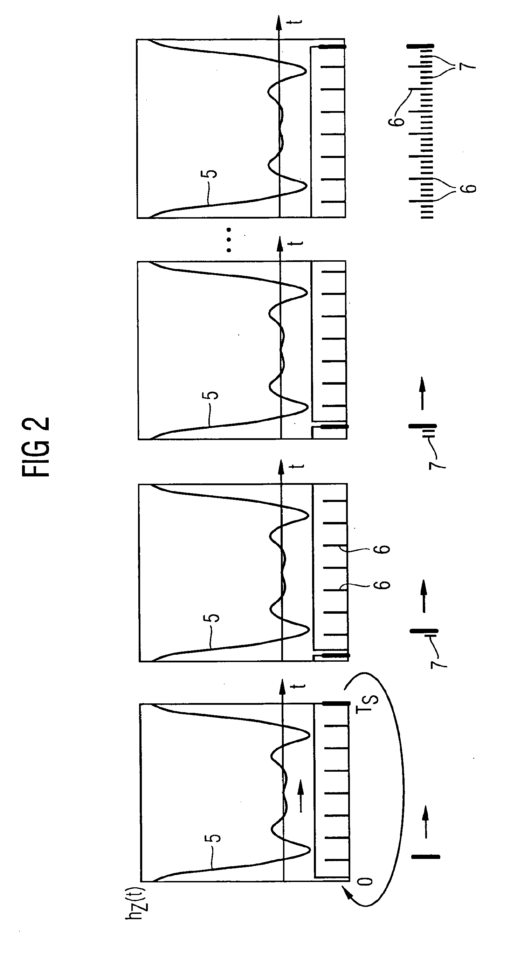

In the second step the actual filtering is carried out. This is shown with regard to figure 2 where by means of an example a symbol having 8 sample values and a factor 4 oversampling is shown. The sample values are denoted by reference symbol 6 and the oversample values are denoted by 7.

Every new data is generated by firstly weighting the single samples of the symbol with the corresponding filter coefficients and afterwards adding up the weighted data. However, in contrast to a typical filtering (such as in a typical FIR-filter) the samples are rotating within the filter at each filter procedure such that the filtering is carried out always within the same symbol. The result is a signal which shows no inter-symbol inferences since the filtering is carried out on the symbol basis.

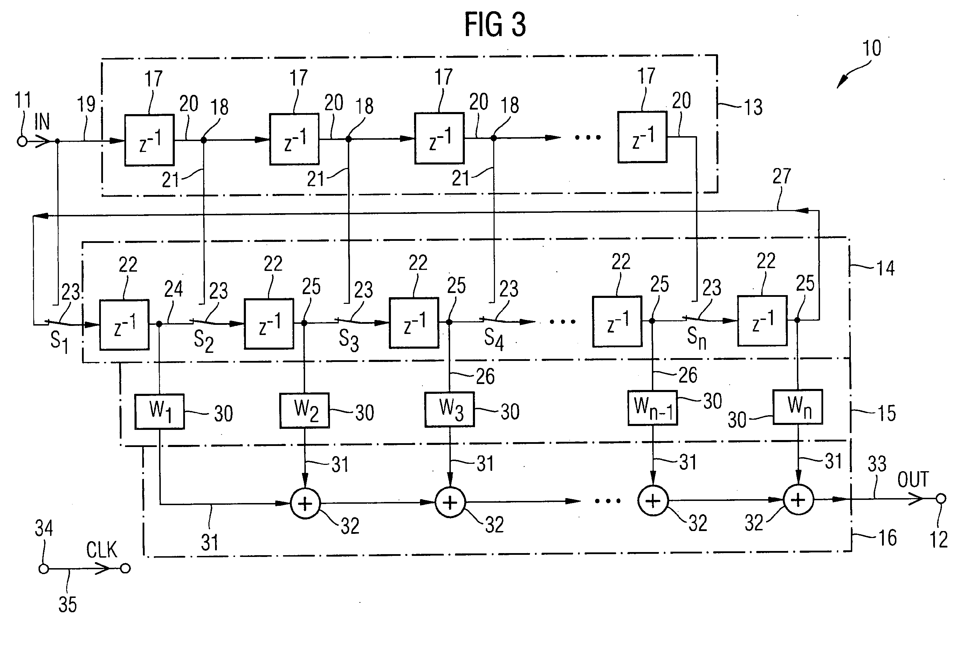

Figure 3 shows a particularly preferred embodiment of the implementation of a cyclic FIR-filter according to the present invention and for carrying out the new method. The cyclic FIR-filter, hereinafter shortly referred to as cyclic filter, is denoted by reference symbol 10 in figure 3. As can be seen in figure 3 the FIR-filter 10 is a filter of the n-order comprising n-delay elements.

The FIR-filter 10 comprises an input terminal 11, at which a digital input signal IN is present. The FIR-filter further comprises an output terminal 12, at which a digital output signal OUT may be tapped off.

The cyclic filter 10 further comprises a first delay chain 13, a second delay chain 14, a weighting circuit 15 and a summing circuit 16.

The first delay chain 13 comprises n single delay elements 17 which are arranged in series connection to each other. The signal input 11 of the cyclic filter 10 is connected via an internal signal line 19 to the first delay element 17 of the first delay chain 13. This first delay element 17 is then connected in series via a data line 20 to the second delay element 17 of the first delay chain 13. At a branching node 18 within the data line 20, which forms a tap, the first delay element 17 is connected via a line 21 to the second delay chain 14. In this manner, all delay elements 17 of the first delay chain 13 are arranged in series connection to each other providing at their output sides an output signal which can be tapped of at the branching nodes 18 to the second delay chain 14.

The second delay chain 14 also comprises n single delay elements 22. These delay elements 22 within the second delay chain 14 are also arranged in series connection to each other. Unlike the arrangement of the delay elements 17 within the first delay chain 13 the delay elements 22 within the second delay chain 14 are coupled to each other by corresponding switching means 23. For example, between the first and second delay elements 22 of the second delay chain 14 one switching means 23 is provided. Also at the input side of the first delay element 22 an additional switching means 23 is present. This switching means 23 may be realized by a transistor, such as a MOS-FET or a J-FET.

Each one of the delay elements 22 is connected via a data line 24 and the switching means 23 to the next adjacent delay element 22 in the chain 14. The switching means 23 are designed to switch between the data line 24 within the second delay chain 14 and the corresponding branch line 21 of the first delay chain 13. At a branching node 25 the data line 24 is connected via a line 26 to the weighting circuit 15. At the branching nodes 25 an output signal maybe tapped of and fed in the weighting circuit 15. Also between each two delay elements 22 a switching means 23 is provided. These switching means 23 are arranged within the data line 24. The last delay element 22 of the second delay chain 14 is connected with its output side via a feedback line 27 and a switching means 23 to the input side of the first delay element 22 of the second delay chain 14.

At each output terminal of a delay element 17, 22 a digital (i. e. binary) data signal is present comprising one bit.

The weighting circuit 15 comprises n multipliers 30. Each of the multiplier 30 comprises one filter coefficient $W_1$ - $W_n$. The multipliers 30 within the weighting circuit 15 are designed to multiply the digital data signal emitted by a respective one of the delay elements 22 of the second delay chain 14 with the corresponding filter coefficient $W_1$ - $W_n$. For this purpose, the multipliers 30 are connected on their input sides via the line 26 to the output sides of the corresponding delay element 22. The multipliers 30 are further connected with their output sides via lines 31 to the summing circuit 16.

The summing circuit 16 comprises n-1 summing elements 32 whereas each one of the summing elements 32 is connected on their input sides via lines 31 to two multipliers 30. The different summing elements 32 are arranged in cascade configuration to each other such that the first summing element 32 adds up the input signals which are present at the first two multipliers 30 and emits an added up digital data signal. This digital data signal is then provided to the next one of the summing elements 32 in the summing circuit 16 together with a signal of the next multiplier 30. In this way each one of the summing elements 32 generates an added up data signal out of a previous added up digital data signal and another data signal provided by a multiplier 30. The last one of the summing elements 32 within the summing circuit 16 is connected via the line 33 to the output terminal 12 for providing the output signal OUT of the cyclic filter 10.

The cyclic filter 10 further comprises a clock terminal 34 for providing an internal clock signal CLK via clock lines 35 to the different elements of the cyclic filter 10. For the purpose of better clearness of the drawings the different connections of the clock terminal 34 to the elements of the cyclic filter 10 and here especially to the delay elements 17, 22 is not shown in figure 3. In the cyclic filter 10 the two delay chains 13, 14 operate at the same clock of the clock signal CLK.

Figure 3 shows a cyclic filter 10 which comprises the filter-functionality on a symbol basis. Hereinafter, the functionality of the cyclic filter 10 in figure 3 is described in more detail.

At the input terminal 11 an input signal IN is provided which already contains oversampled data signals. At the output terminal 12 cyclically symbol-wise filtered data are provided.

At the beginning all switches $S_1$ - $S_n$ are in a first switching position, as shown in figure 3. In this first switching position the switches $S_1$ - $S_n$ are closed to connect the different delay elements 22 within the second delay chain 14 with each other. Thus, in this stage the first delay chain 13 is disconnected from the second delay chain 14.

The digital, e. g. binary coded data signal IN is fed into the first delay chain 13. This delay chain 13 operates as a shifting register. In this mode each one of the delay elements 17 is successively filled with a data bit of the input signal IN until in each delay element 17 one data bit is stored. Each one of the data bits represents one sampling value of the given data symbol of the input data signal IN. The amount of sampling values of a given input data symbol corresponds to the amount of delay elements 17 within the first delay chain 13 and thus to the order n of the cyclic filter 10. In case, that the last sampling value of a given symbol is present at the input terminal 11, the filling of the delay chain 13 is completed. Then the switches $S_1$ - $S_n$ switch to a second switching position. In this second switching position the input sides of the delay elements 22 within the second delay chain 14 are directly connected (via the lines 21) to the corresponding branching nodes 18 and the output sides of corresponding delay elements 17 of the first delay chain 13. The switches $S_1$ - $S_n$ maintain this second switching position for at least one clock cycle of the clock signal CLK.

In this second switching position all sampling values, which either are present at the input terminal 11 or are stored in the first delay elements 17, are loaded via the lines 21 and the switches $S_1$ - $S_n$ into corresponding second delay elements 22 of the second delay chain 14. To carry out this loading step typically only one clock cycle of the clock signal CLK is necessary. Afterwards, that means after at least one clock cycle, the switches $S_1$ - $S_n$ return to their original first switching position to connect the different delay elements 22 of the second delay chain 14 to each other.

This second delay chain 14 together with the weighting circuit 15 and summing circuit 16 work more or less as a known FIR-filter. However, in contrast to a known FIR-filter the different sampling values (bits) of the input data symbol are rotating within the second delay chain 14 by using the feedback line 27. In this operation mode the different sampling values (bits) each are weighted with the weighting factor $W_1$ - $W_n$ of the different multipliers 30 within the weighting circuit 15. These weighted sampling values are then added up and provided at the output terminal 12 in the form of a digital output signal OUT. This clockwise multiplying, adding up and outputting of the sampling values is performed for n-1 clock cycles of the clock signal CLK. After n-1 clock cycles the rotation of the sampling values of the data symbol is completed, since there are n weighted sample values of a given input data symbol present. This weighted data symbol is then provided to the output terminal 12 in form of the output signal OUT.

During the data rotation the first delay chain 13 already picks up the sampling values of the next digital input data symbol which are then, during the next clock cycle where the switches $S_1$ - $S_n$ are again switched to the second switching position transferred from the output terminals of the first delay elements 17 of the first delay chain 13 to the corresponding delay elements 22 of the second delay chain 15. This process is constantly repeated.

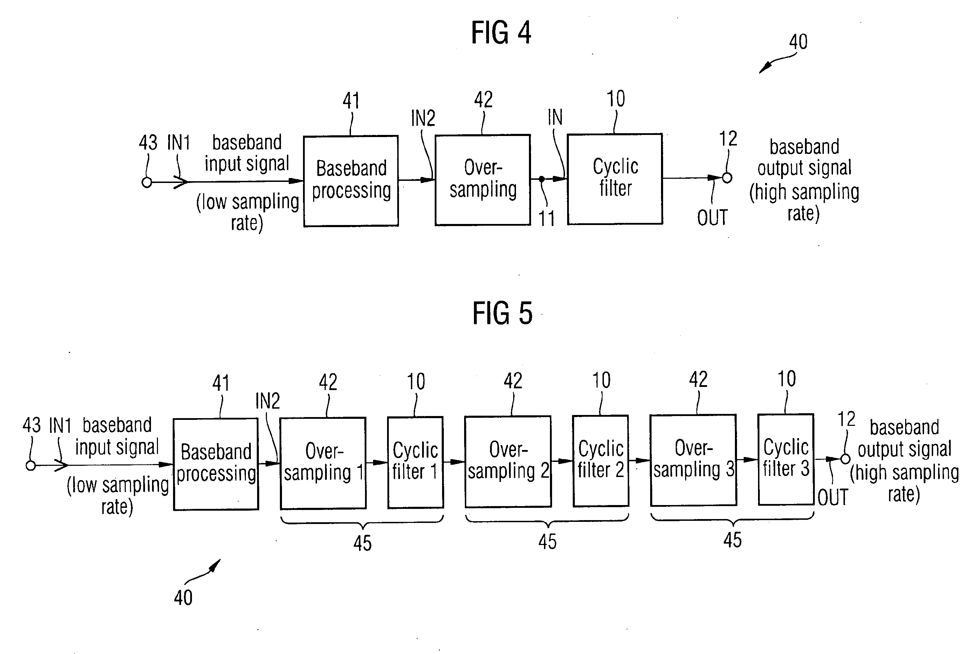

Figure 4 shows a block diagram illustrating an implementation of a cyclic filter. In figure 4 a circuit arrangement within a telecommunication system is denoted by reference symbol 40. The telecommunication system maybe a wireless system, such as an OFDM-based system. This circuit arrangement which may be a receiving circuit or part of a receiver. This receiving circuit 40 comprises an input terminal 43 for providing a complex baseband input signal IN1. This baseband input signal IN1 shows a comparably low sampling rate. The input terminal 43 is connected to a baseband processor 41 which performs baseband processing of the input signal IN1 and provides a baseband processed input signal IN2. This input signal IN2 is provided to an oversampling circuit 42. In this oversampling circuit 42 the input signal IN1 is oversampled to provide the oversampled input signal IN. This input signal IN forms the digital oversampled input signal IN which is provided to the cyclic filter 10 as shown in figure 3.

Figure 5 shows a bloc diagram illustrating another embodiment of an implementation of a cyclic filter according to the present invention. Unlike the embodiment shown in figure 4 where only one cyclic filter 10 and one oversampling circuit 42 for oversampling and filtering the input signal is provided, in the embodiment in figure 5 a multi-stage cyclic filtering and oversampling is provided by using different sampling and filtering stages. For example, an oversampling by the factor of 8 may be realised by 3 stages arranged in series connection to each other.

In figure 5 the different stages are denoted by reference symbol 45 whereas each one of these stages 45 is designed to perform an oversampling of the factor of 2 and to perform a filtering of this factor 2 oversampled input signal. By providing 3 of these stages 45 an overall factor $2^3 = 8$ oversampling may be implemented. For the implementation of this circuit arrangement 40 a cyclic filter 10 may be used, which in principal corresponds to the one shown in figure 3. However, with these 3 stages oversampling a less complex filter design is needed for the implementation of a cyclic filter 10. Therefore, since the oversampling circuit 42 only performs a factor 2 oversampling it is impossible to reduce the circuit elements of the cyclic filter 10 which means that the cyclic filter 10 used in this circuit arrangement 40 comprises less delay elements 17, 22 within its first and second delay chains 13, 14.

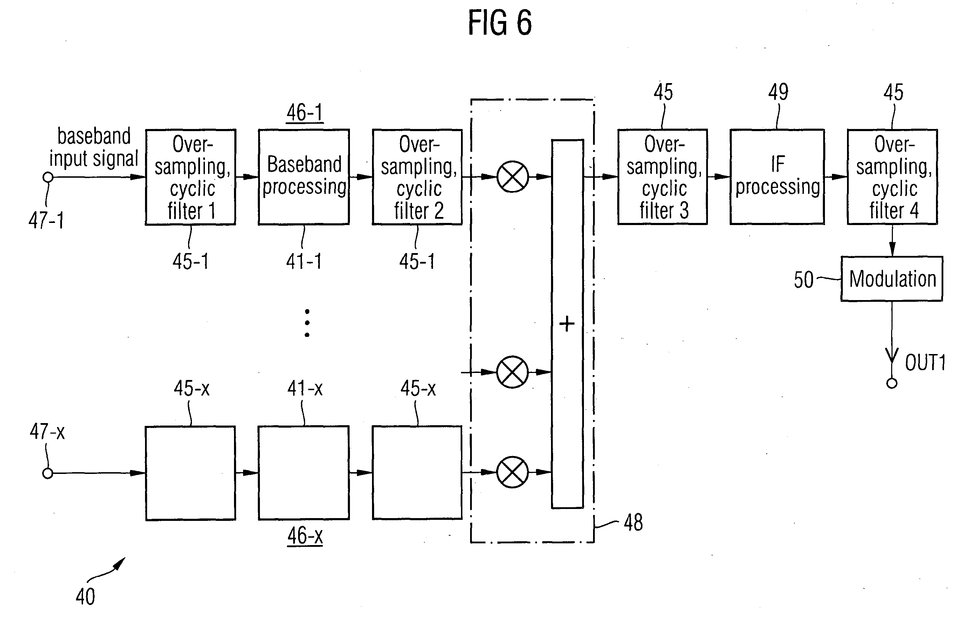

Figure 6 shows a block diagram of a third embodiment of a circuit arrangement 40 according to the present invention. Unlike the second embodiment shown in figure 5, where only one input signal is processed, oversampled and filtered to provide an output signal, in the embodiment shown in figure 6 more than 2 input signals are combined with each other. Here, an amount of data paths 46-1 - 46-x are provided. Each one of these data paths 46-1 - 46-x are connected on their input side with corresponding input terminals 47-1 - 47-x. In the embodiment in figure 6 each data path 46-1 - 46-x comprises two stages 45-1 - 45-x. Each of these stages 45-1 - 45-x comprise an oversampling circuit 42 and a cyclic filter 10. Between two of these stages 45-1 - 45-x a baseband processor 41-1 - 41-x is arranged.

The circuit arrangement 40 in figure 6 further comprises an interface circuit 48. This interface circuit 48 comprises an amount of input terminals which correspond to the amount of data paths 46-1 - 46-x. The interface circuit 48 is connected with its input terminals to these data path 46-1 - 46-x. The interface circuit 48 is constructed to combine different input signals which are processed and filtered in the different data paths 46-1 - 46-x. The interface circuit 48 provides at its output side a combined data signal which is then provided to another stage 45. This stage 45 also comprises an oversampling circuit and a cyclic filter. Further an interface processing circuit 49 is provided downstream to the third sampling stage 45 which is designed for data processing of the combined interface data signal. Typically, but not necessarily, another sampling stage 45 is arranged downstream to the interface processing circuit 49. Further, a modulation circuit 50 is provided which generates the radio frequency output signal OUT1.

In the embodiment shown in figure 6, the implementation of cyclic filters according to the present invention within the circuit arrangement 40 may be used in the digital part of a wireless transmitting device, but may also be used for other applications, such as a wireless receiving device or a wired device.

In some cases, the cyclic filter and especially its circuitry maybe simplified. This is for example preferred in some circuit applications where for example the cyclic filter directly follows the oversampling circuit, such as shown in figures 4 and 5. In these cases both algorithms for cyclic filtering and oversampling maybe combined with each other in order to maintain a significant simplified implementation of a cyclic filter.

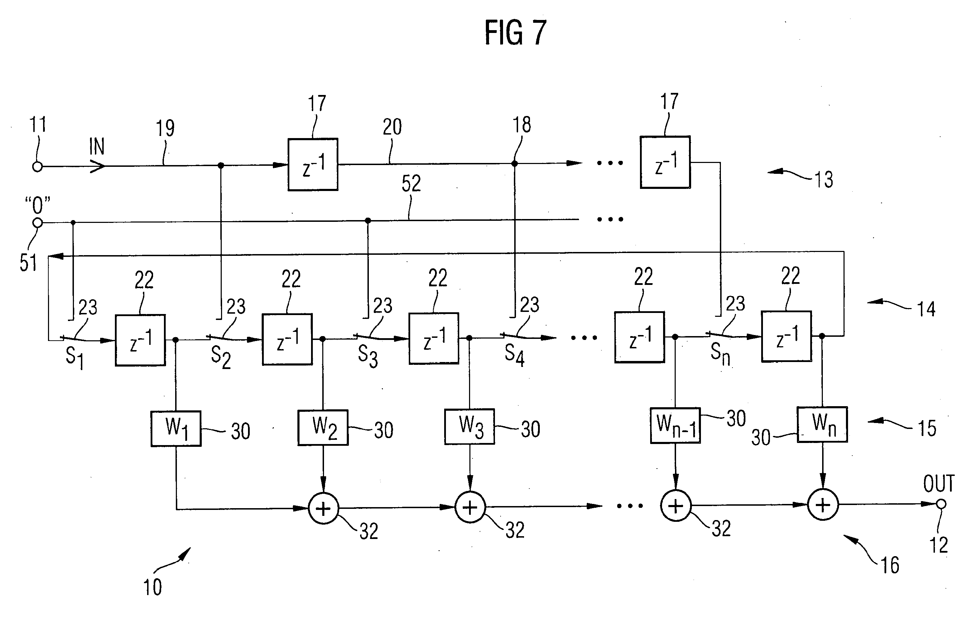

Figure 7 shows a second embodiment of a cyclic filter which unlike the first embodiment in figure 3 comprises such a simplified circuitry. Here especially the circuitry of the first delay chain 13 is simplified compared to the one in figure 3. In the embodiment in figure 7 an example of the first delay chain 13 in case of an oversampling factor of 2 is illustrated.

The underlying idea in figure 7 is that in the process of oversampling only defined logical levels, such as logical zeros, are included. However, if only logical zeros are used, this may also be realised by a given, i. e. fixed, precharge potential. This precharge potential which is in the embodiment in figure 7 a low level ("0") is provided via a precharge terminal 51 and a separate precharge line 52. This separate precharge line 52 represents this zero level. Consequently the amount of delay elements 17 within the first delay chain 13 corresponds to the amount of sampling values of the input data symbol IN without oversampling. This leads to a significant simplified first delay chain 13 especially if a very high oversampling level is applied to the input signal IN. Thus, in the first delay chain only those data bits are provided, which are maintained out of the input signal before applying an oversampling on this input signal.

Mobile electronic devices nowadays use a number of wireless standards to communicate with each other. To cover a wider range of applications the technological trend leads towards a single chip multimode implementation of various wireless standards. In order to keep the size and thus the costs of such systems at a minimum as many circuit blocks and functional units as possible have to be shared. Here, one of the key elements is a so-called polyphase filter (PPF). In radio frequency receiver front end devices as well as in radio frequency transceivers polyphase filters are typically used for the channel selection. A further simplifying of the circuit arrangement 40 shown in figures 4-6 can be realised by using such polyphase filters.

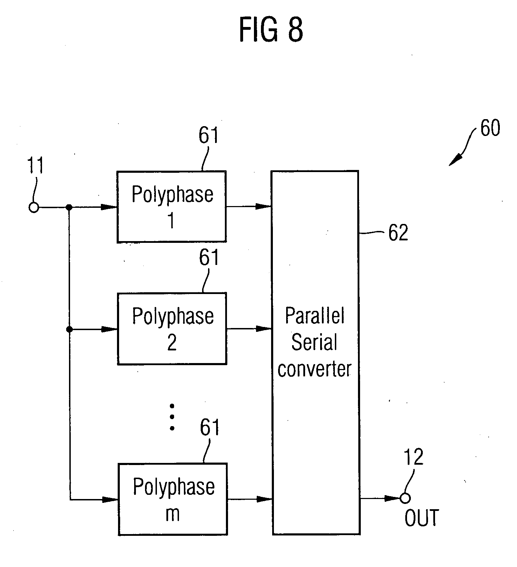

Figure 8 shows a block diagram illustrating the circuit arrangement of the cyclic filter using an amount of polyphases. In this circuit arrangement some delay elements within the second delay chain, which perform unnecessary operations by multiplying the zero samples with the filter coefficients, are not used anymore. This is being realised by a rearrangement of the multipliers with different weighting factors $W_l$ [l=1-n] in multiple polyphases. The principal basic circuit is shown in the block diagram in figure 8. The filter arrangement 60 in figure 8 shows an amount of m polyphase filter circuits 61 which are connected with their input sides to the common input terminal 11. The polyphase circuits 61 are connected with their output sides to a parallel serial-converter 62 which provides a parallel serial-conversion of the parallel input signals provided at its input terminals to produce at the output terminal 12 a data output signal OUT with serial data contained therein.

To provide a factor m oversampling all in all m polyphase circuits 61 are necessary. Each of these polyphase circuits 61 is similar to the cyclic filter design shown in figure 3. However, the length of each polyphase is shortened to 1/m with the consequence, that each of the polyphase filters 61 comprises k = n/m weighting factors instead of n weighting factors as shown in the embodiment in figure 3. Thus, in each one of the n polyphase circuits k · m = n weighting factors $W_l$ are needed.

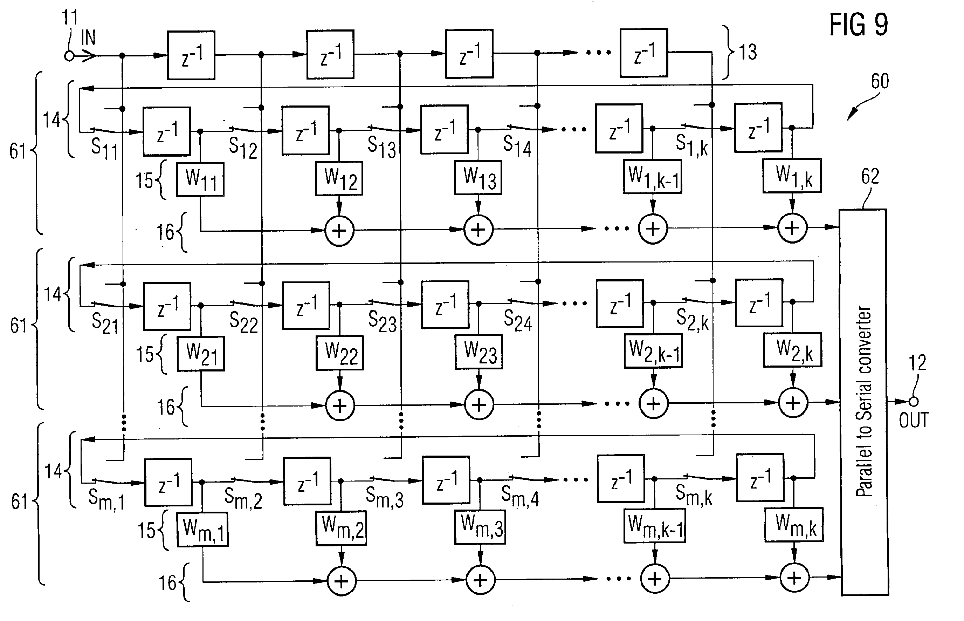

Figure 9 shows the circuit arrangement comprising several cyclic polyphase filters according to the present invention. The weighting factors $W_i$ are newly arranged in the different polyphase circuits. Thus, for the weighting factors $W_{i,j}$ the following equation is true:

$$W_{i,j} = W_{m \cdot (j-1)+i} = W_I$$

Each of the polyphase circuits 61 comprises a second delay chain 14 whereas this second delay chain 14 correspond to the second delay chain 14 in the cyclic filter 10 in figure 3. A polyphase circuit 61 further comprises a first delay chain 13, the weighting circuit 15 and summing circuit 16. However, a separate first delay chain 13, such a shown in figure 3, is not needed for every polyphase circuit 61 with the consequence, that preferably only one first delay chain 13 is needed for all of the m polyphase circuits 61. By providing only one first delay chain 13 it is possible since everyone of the polyphase circuits 61 needs the same data which is generated out of the same input signal IN.

An advantage of this circuit arrangement 60 using m polyphase filters 61 is the fact, that a common parallel to serial converter 62 may be commonly used for each polyphase filter 61. However, the main advantage lays in the fact, that all elements of the polyphase filters 61 may be driven by a comparable low clock CLK whereas, only the parallel to serial converter 62 is run by a high clock CLK.

Another very important realisation of a polyphase filter is a so-called halfband filter. Here, in every polyphase every weighting factor except one is zero. Especially, with an oversampling factor m = 2 the circuit effort is reduced again significantly.

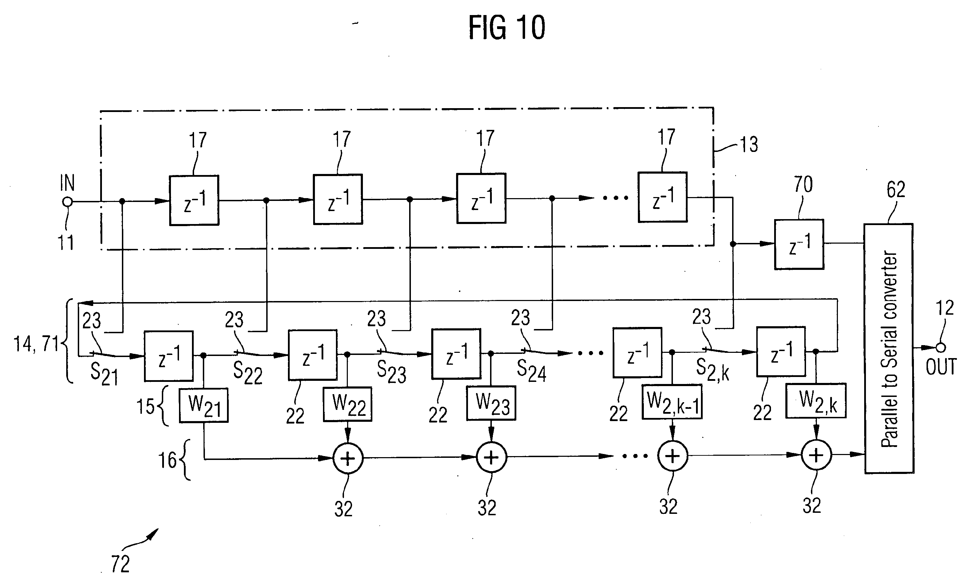

Figure 10 shows a circuit arrangement of a halfband filter with m = 2 and

$$W_{1,j} = \begin{Bmatrix} 0 \text{ for } j < k \\ 1 \text{ for } j = k \end{Bmatrix}.$$

Figure 10 shows a cyclic halfband polyphase filter 72 having an oversampling factor m = 2. For this halfband polyphase filter 72 only two polyphase circuits 70, 71 are needed, whereas the first one of the polyphase circuits 70 is realised by a single delay element 70. The second polyphase circuit 71 is constructed such as the second delay chain 14 in figure 3. Here, the first delay chain 13, which is constructed such as the one shown in figure 3, serves for both polyphase circuits 70, 71. At the output sides of the two polyphase circuits 70, 71 a common parallel to serial converter 62 is provided to combine the two digital output signals of the polyphase circuits 70, 71 to one common digital output signal OUT.

It is noted, that further simplifications are possible, if e. g. further weighting factors are dropped. The dropped weighting factors may be those having an amplitude which is comparatively that small (e. g. which is nearly zero or which is reduced by quantisation to zero).

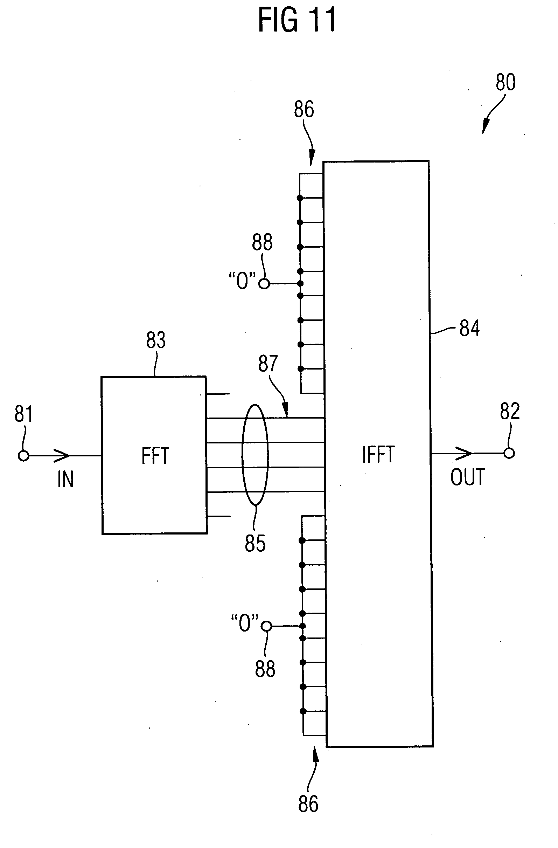

If a great amount of weighting factors is present a cyclic filtering is very efficient by using a very high performance folding procures. This embodiment is shown with regard to figure 11 where a cyclic square filtering is illustrated.

Figure 11 shows a filter arrangement 80 having an input terminal 81 for providing an input signal IN and an output terminal 82 for providing an digital output signal OUT. The input terminal 81 is connected to a FFT-circuit (FFT = Fast Fourier Transformation) which provides a Fast Fourier transformation on the digital input signal IN. At the output sides of the FFT-circuit 83 the input signal IN is in the frequency domain. This frequency domain input signal IN - the so-called carriers - is then provided to a downstream arranged IFFT-circuit 84. The IFFT-circuit comprises an amount of input terminals 86, whereas each input terminal 86 is used for a single frequency produced by the FFT-circuit.

The IFFT-circuit 84 generates an output signal OUT in the time domain out of the input signals which is then provided at the output terminal 82. However, only some of the frequencies (carriers) which are provided by the FFT-circuit 83 are fed into the IFFT-circuit 84 forming a so called useful band 85. The other frequency parts of the input signal IN are not used and thus, not fed into the IFFT-circuit 84.

Hereinafter, the functionality of the filter arrangement 80 in figure 11 is described in more detail.

Firstly, an input signal IN in the time domain is provided to the input terminal 81. This input signal then undergoes a FFT-transformation within the FFT-circuit 83. In OFDM or OFDMA based systems typically but not necessarily, the input signal IN (or the corresponding symbol) undergoes the FFT without the cyclic prefix. This represents the spectral illustration of the symbol in the frequency domain. By incorporating some zero-values ("0") at terminals 88 on both frequency sides of the FFT-data signal generated by the FFT-circuit 83 the data signal is adopted to the data rate of the output signal OUT. Additionally all data of the frequency domain which are not within the useful band 85 are set to a zero value. This signal having the frequency data in the useful band 85 and the zero values outside or beyond the useful band are then transformed within the IFFT-circuit 84 into the time domain. As a result of this IFFT-transformation an oversampled cyclic filtered symbol is generated, which is then provided in form of the output signal OUT at the output terminal 82.

In OFDM-based systems, the filter arrangement 80 shown in figure 11 may also be simplified by dropping the FFT-circuit 83 and by directly feeding the OFDM-subcarriers of the input data symbol into the IFFT-circuit 84 (e. g. at the marked places of the useful band 85). In this manner, the original FFT-circuit 83 of an OFDM- (or OFDMA-) based system is dropped and replaced by the IFFT-circuit 84 as shown in figure 11.

While embodiments and applications of this invention have been shown and described above, it would be apparent to those skilled in the art that many more modifications than mentioned above are possible without departing from the inventive concepts described herein. The invention, therefore, is not restricted except in the spirit of the depending claims.

It is therefore intended that the foregoing detailed description is to be regarded as illustrative rather than limiting and that it is understood that it is the following claims including all equivalents described in these claims that are intended to define the spirit and the scope of this invention. Nor is anything in the foregoing description intended to disavow the scope of invention as claimed or any equivalents thereof.

It is also noted that the above mentioned embodiments and examples should be understood to be only exemplary. That means additional circuit arrangements and functional circuit may be implemented within the base station and/or within one or more of the subscribers.

Further, the present invention is explicitly not limited to a wireless communication but can also be used in a hardwired communication network, which is, for example, also symbol based.

LIST OF USED REFERENCE SYMBOLS

| | |
|---|---|
| 1, 2 | main sections |
| 3, 4 | residual sections |
| 5 | cyclic filter pulse response |
| 6 | sample values |
| 7 | oversample values |
| 10 | cyclic FIR-filter |
| 11 | input terminal |

| | |
|---|---|
| 12 | output terminal |
| 13, 14 | delay chains |
| 15 | weighting circuit |
| 16 | summing circuit |
| 17, 22 | delay elements |
| 18 | branching node |
| 19 | signal line |
| 20, 21 | lines |
| 23 | switching means, MOSFETs |
| 24, 26 | lines |
| 25 | branching node |
| 27 | feedback line |
| 30 | multipliers |
| 31, 33 | lines |
| 32 | summing elements |
| 34 | clock terminal |
| 35 | clock lines |
| 40 | circuit arrangement |
| 41 | baseband processor |
| 41-1 - 41-x | baseband processor |
| 42 | oversampling circuit |
| 45 | stages |
| 45-1 - 45-x | stages |
| 46-1 - 46-x | data paths |
| 47-1 - 47-x | input terminals |
| 48 | interface circuit |
| 49 | interface processing circuit |
| 50 | modulation circuit |
| 51 | precharge terminal |
| 52 | precharge line |
| 60 | filter arrangement |
| 61 | polyphase filter circuits |
| 62 | parallel serial-converter |
| 70, 71 | polyphase circuits |
| 72 | cyclic halfband polyphase filter |
| 80 | filter arrangement |
| 81 | input terminal |
| 82 | output terminal |
| 83 | FFT-circuit |
| 84 | IFFT-circuit |
| 85 | useful band |
| 86 | input terminal |
| CLK | clock signal |
| $h_F(t)$ | filter pulse response |
| $h_z(t)$ | cyclic filter pulse response |
| IN - IN2 | digital input signals |
| OUT, OUT1 | output signals |
| $S_1 - S_n$ | switches |
| $T_s$ | symbol duration |
| $W_1 - W_n$ | filter coefficients |

## Claims

1. Cyclic filter circuit (10) for multi-carrier data transmission systems, especially in a wireless communication system, comprising:

- an input terminal (11) for providing an oversampled input signal (IN),
- at least one first delay chain (13) coupled to the input terminal (11) having an amount of first delay elements (17) for storing the sample values of at least one data symbol of the input signal (IN),
- at least one second delay chain (14) having an amount of second delay elements (22), which comprises a feedback line between the last one and the first one of the second delay chain,
- switching means (23) between the first and second delay chain (13, 14) to cyclically and symbol-wise transfer the stored data of the first delay elements (17) to corresponding second delay elements (22) of the second delay chain (14),
- wherein the second delay chain (14) comprises a feedback line (27) between the last one and the first one of the second delay elements (22) to allow a rotation of the stored data when the sample values are weighted and added up in the second delay chain (14).

2. Circuit according to claim 1,
wherein the switching means comprise an amount of controllable switches ($S_1 - S_n$), such as MOSFETs ($S_1 - S_n$).

3. Circuit according to claim 2,
wherein the controllable switches ($S_1 - S_n$) are arranged such that in a first switching position the stored data in the first delay elements (17) can be transferred to corresponding second delay elements (22) and that in a second switching position they connect adjacent second delay elements (22) with each other.

4. Circuit according to any of the preceding claims,
wherein the cyclic filter (10) circuit further comprises a weighting circuit (15) for weighting the data values stored in the second delay elements (22), a summing circuit (16) for adding up the weighted data values and an output terminal (12) for providing a filtered, digital oversampled output signal (OUT) which comprises the weighted and added up values.

5. Circuit according to any of the preceding claims,
wherein the first delay chain (13) is designed to operate as a shift register.

6. Circuit according to any of the preceding claims,
wherein the second delay chain (14) is designed to operate as a FIR-filter.

7. Circuit according to any of the preceding claims,
wherein each one of the first and second delay element (22) is designed to store one data bit of the data symbol of the input signal (IN).

8. Circuit according to any of the preceding claims, wherein the amount of first delay elements (17) corresponds to the amount of second delay elements (22).

9. Circuit according to any of the preceding claims, wherein the amount of first delay elements (17) corresponds to the amount of sampling values of the oversampled input data signal (IN) of at least one data symbol.

10. Circuit according to any of the preceding claims, wherein the amount of first and second delay elements (17, 22) corresponds to the amount of switches (23), multipliers (30) of the weighting circuit (15) and summing elements (32) of the summing circuit (16).

11. Circuit according to any of the preceding claims, wherein the amount of first delay elements (17) within the first delay chain (13) corresponds to the amount of sampling values of the input data symbol (IN) without oversampling the input signal.

12. Circuit according to claim 11, wherein a precharge line (52) is provided for providing a fixed precharge signal ("0"), especially a low signal level, instead of the missing oversampling values.

13. Circuit according to any of the preceding claims, wherein the cyclic filter circuit (10) comprises at least two polyphase filters (61).

14. Circuit according to claim 13, wherein each polyphase filter (61) comprises a second delay chain (14), a weighting circuit (15) and summing circuit (16) and wherein a common first delay chain (13) is used for at least two of the polyphase filters (61).

15. Circuit according to claim 13 or 14, wherein the cyclic filter circuit (10) comprises a halfband polyphase filter (72) and wherein this halfband polyphase filter (72) comprises two polyphase filters (70, 71), whereas the first one of the polyphase filters (70) is realised by a single delay element (70) and the second polyphase filter (71) corresponds to the second delay chain (14).

16. Circuit arrangement (40) comprising:

    - at least one oversampling circuit (42) for oversampling an baseband signal (IN1, IN2),
    - at least one cyclic filter circuit (10) according to one of the preceding claims for filtering the oversampled baseband signal (IN).

17. Circuit according to claim 16, wherein a multi-stage oversampling and filtering is provided for oversampling and filtering the digital input signal (IN) and wherein each stage (45) comprises one oversampling circuit (42) and one cyclic filter circuit (10) arranged downstream to the oversampling circuit (42) of the same stage (45).

18. Method for filtering a received data signal using a cyclic filter (10), such as the cyclic filter circuit (10) according to one of the claims 1 to 15, wherein per data symbol of an oversampled digital input signal (IN) the different values of the data symbol are cyclically rotated within the same data symbol when they are passing through the cyclic filter (10) such that the filtering only takes place at one and the same symbol.

19. Method according to claim 18, wherein in a first step a cyclic filter pulse response $h_z(t)$ is established out of the filter pulse response $h_F(t)$ by cutting and swapping the filter pulse response $h_F(t)$ at the symbol boundaries and by adding up corresponding sections of the filter pulse response $h_F(t)$.

20. Method according to claim 19, wherein the first step is carried out only once to determine the filter coefficients of the cyclic filter (10).

21. Method according to one of the claims 18 - 20, wherein in a second step the filtering is carried out, where every new data is generated by firstly weighting the single samples of the data symbol with the corresponding filter coefficients and afterwards adding up the weighted data wherein the samples are rotating such that the filtering is carried out always within the same data symbol.

EP 2 007 092 A1

FIG 1

$h_F(t)$

$h_F(t)$

$t_0$

$T_L$  $T_S$  $T_S$  $T_R$

3  1  2  4

FIG 1A

$h_Z(t)$

2  1

0  $T_S$

FIG 1B

$h_Z(t)$

5

0  $T_S$

FIG 2

FIG 3

## FIG 4

43 IN1 baseband input signal (low sampling rate) → | Baseband processing | 41 → IN2 | Over-sampling | 42 → IN / 11 → | Cyclic filter | 10 → 12 OUT → baseband output signal (high sampling rate)

40

## FIG 5

43 IN1 baseband input signal (low sampling rate) → | Baseband processing | 41 → IN2 | Over-sampling 1 | 42 → | Cyclic filter 1 | 10 → | Over-sampling 2 | 42 → | Cyclic filter 2 | 10 → | Over-sampling 3 | 42 → | Cyclic filter 3 | 10 → 12 OUT → baseband output signal (high sampling rate)

45    45    45

40

EP 2 007 092 A1

FIG 6

# FIG 7

EP 2 007 092 A1

# FIG 8

FIG 9

EP 2 007 092 A1

# FIG 10

EP 2 007 092 A1

# FIG 11

**European Patent Office**

# EUROPEAN SEARCH REPORT

Application Number

EP 07 01 2008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2003/058975 A1 (BAAS BEVAN M [US] ET AL) 27 March 2003 (2003-03-27) <br> * abstract * <br> * paragraph [0018] * <br> * paragraph [0035] - paragraph [0046] * <br> * paragraph [0049] - paragraph [0050]; figure 10 * <br> ----- | 1-21 | INV. <br> H04L27/26 |
| A | US 6 657 950 B1 (JONES IV VINCENT K [US] ET AL) 2 December 2003 (2003-12-02) <br> * abstract * <br> * column 4, line 28 - line 39 * <br> * column 5, line 15 - line 63 * <br> ----- | 1-21 | |
| A | US 2004/120409 A1 (YASOTHARAN AMBIGHAIRAJAH [CA] ET AL) 24 June 2004 (2004-06-24) <br> * abstract * <br> * paragraph [0084] - paragraph [0088] * <br> ----- | 1-21 | |

| TECHNICAL FIELDS SEARCHED (IPC) |
|---|
| H04L |

The present search report has been drawn up for all claims

| Place of search | Date of completion of the search | Examiner |
|---|---|---|
| The Hague | 12 December 2007 | Koukourlis, Sotirios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 01 2008

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2007

| Patent document cited in search report | | Publication date | Patent family member(s) | | Publication date |
|---|---|---|---|---|---|
| US 2003058975 | A1 | 27-03-2003 | TW<br>WO | 223533 B<br>03028327 A2 | 01-11-2004<br>03-04-2003 |
| US 6657950 | B1 | 02-12-2003 | NONE | | |
| US 2004120409 | A1 | 24-06-2004 | NONE | | |

EPO FORM P0459

For more details about this annex : see Official Journal of the European Patent Office, No. 12/82